# EUROPÄISCHE PATENTSCHRIFT

(11) **EP 1 082 239 B1**
(45) Veröffentlichungstag und Bekanntmachung des Hinweises auf die Patenterteilung: **08.06.2005**
(21) Anmeldenummer: 99959236.3
(22) Anmeldetag: 06.11.1999
(51) Int. Cl.: B60S 1/42

(54) **WISCHVORRICHTUNG FÜR SCHEIBEN VON KRAFTFAHRZEUGEN**
WIPER DEVICE FOR THE WINDOWS OF MOTOR VEHICLES
DISPOSITIF D'ESSUYAGE POUR PARE-BRISES DE VEHICULES AUTOMOBILES

(30) Priorität: 30.03.1999 DE 19914413
(43) Veröffentlichungstag der Anmeldung: 14.03.2001
(73) Patentinhaber: ROBERT BOSCH GMBH, 70442 Stuttgart (DE)
(72) Erfinder: KOTLARSKI, Thomas, D-53474 Bad Neuenahr (DE)
(86) Internationale Anmeldenummer: PCT/DE1999/003557
(87) Internationale Veröffentlichungsnummer: WO 2000/059761

(56) Entgegenhaltungen:
- EP-A- 0 255 352
- DE-A- 19 729 865
- FR-A- 2 254 959
- FR-A- 2 365 717
- GB-A- 2 238 953
- US-A- 4 445 249

## Beschreibung

### Stand der Technik

Die Erfindung geht aus von einer Wischvorrichtung nach der Gattung des Anspruchs 1, wie sie z.B. aus FR-A-2 365 717 bekannt ist. Bei einer zum Stand der Technik nach Art. 54(3) und (4) EPÜ gehörenden Wischvorrichtung dieser Art WO 99/33687A1/EP 0 984 878 A1, nicht vordem prioritätstag veröffentlicht) sollen die Stützschulter und die Abfangschulter die während des Wischbetriebs auf das Wischblatt einwirkende Zentrifugalkraft aufnehmen, so daß das Gelenk zwischen Wischblatt und Wischerarm bezüglich dieser Kraft vollständig entlastet ist. Da zur Montage des Wischblatts am Wischerarm dieser von der Scheibe weggeklappt werden muß, ergeben sich Schwierigkeiten, wenn das Klappgelenk - beispielsweise aus Gründen des Karrosserie-Stylings - von der Fahrzeugkarrosserie abgedeckt und damit die Klappbewegung blockiert beziehungsweise eingeschränkt ist.

### Vorteile der Erfindung

Bei der erfindungsgemäßen Wischvorrichtung mit den kennzeichnenden Merkmalen des Anspruchs 1 ist es möglich das Wischblatt von dem Wischerarm abzunehmen beziehungsweise an diesen anzubringen, ohne zuvor eine Klappbewegung des Wischerarms auszuführen, weil nach erfolgter Bewegung der Schulter bzw. der Schultern aus der Gegenüberlage ein Abziehen des Wischblatts vom Wischerarm von der Pendelachse weg möglich ist. Dies gilt insbesondere bei der im Ausführungsbeispiel gezeigten Gelenkverbindung zwischen Wischblatt und Wischerarm gemäß der ein Gelenkzapfen des Wischblatts in einer Lagergabel des Wischerarms gelagert ist, welche in Abziehrichtung offen ist. Darüberhinaus kann das kostenintensive Klappgelenk entfallen.

Aus fertigungstechnischen Gründen ist es von Vorteil, die wischerarmfeste Stützschulter am wischerarmseitigen Kupplungsstück und die wischblattseitige Abfangschulter am wischblattseitigen Kupplungsteil der Anschlußvorrichtung anzuordnen.

Eine kompakt bauende Wischvorrichtung ergibt sich, wenn die Stützschulter und die Abfangschulter zwischen der Pendelachse und der Gelenkachse angeordnet sind.

Eine besonders einfache Anordnung der Stütz- und Abfangschultern ist zu bewerkstelligen, wenn in Ausgestaltung der Erfindung das wischerarmseitige Kupplungsstück eine sich in einer auf der Scheibe stehenden Ebene befindliche, im wesentlichen in Richtung der Wischerarmlängsachse erstreckende Wand hat, der eine Oberfläche des wischblattseitigen Kupplungsteils benachbart ist und wenn weiter an der Wand die Stützschulter und an der Oberfläche die Abfangschulter ausgebildet sind.

Bei einer sehr niedrig bauenden Anschlußvorrichtung ist die Erfindung zu realisieren, wenn das wischerarmseitige Kupplungsstück quer zur Längsachse des Wischerarms einen U-förmigen Querschnitt aufweist, wenn weiter in den U-Schenkel dieses Kupplungsstücks je eine Lageraufnahme für einen Gelenkzapfen des wischblattseitigen Kupplungsstücks angeordnet ist, welches zwischen die U-Schenkel des wischerarmseitigen Kupplungsstücks eintaucht und wenn schließlich die Innenseite zumindest eines U-Schenkels die mit der Stützschulter versehene Wand bildet.

Dabei hat zweckmäßig das wischblattseitige Kupplungsteil einen Grundkörper, an welchem die beiden Gelenkzapfen so angeordnet sind, daß sie eine gemeinsame Gelenkachse haben und weiter zumindest eine Fläche des Grundkörpers die mit der Abfangschulter versehene Oberfläche bildet.

Wenn sowohl die Stützschulter als auch die Abfangschulter einen um die Achse des Gelenks gekrümmten Verlauf haben und der jeweilige Krümmungsradius dem jeweiligen Abstand von der Gelenkachse entspricht, ergibt sich eine vergleichsweise großflächige Anlage der beiden Schultern aneinander was deren Verschleiß minimiert.

Eine besonders einfache und kostengünstige Ausführungsform der Erfindung ist erreicht, wenn an dem Grundkörper ein Ende einer im wesentlichen in Richtung der Gelenkachse auslenkbare Federzunge gehalten ist, an deren freien Ende die Abfangschulter angeordnet ist.

Zur weiteren Vereinfachung der Erfindung ist der Grundkörper aus einem federelastischen Kunststoff hergestellt, wobei die mit der Abfangschulter versehenen Federzunge einstückig mit diesem verbunden ist.

Dabei ergibt sich eine besonders einfache, weil keine zusätzlichen Bauteile aufweisende Ausführung der Erfindung, wenn im Bereich der Abfangschulter zwischen dem Grundkörper und der Federzunge ein zu dieser randoffener Schlitz vorhanden ist, dessen Breite größer ist als die wirksame Breite der Abfangschulter.

Bei bestimmten Anwendungsfällen kann es von Vorteil sein, wenn an jedem der beiden Kupplungsstücke mehrere Stützschultern und Abfangschultern angeordnet sind.

Wenn an den beiden den Grundkörper des wischblattseitigen Kupplungsteils übergreifenden U-Schenkel des wischerarmseitigen Kupplungsstücks je eine Stützschulter ausgebildet ist und weiter an jeder der beiden den U-Schenkeln benachbarten Seiten des Grundkörpers eine mit der Abfangschulter versehene Federzunge angeordnet ist ergibt sich eine besonders betriebssichere Verbindung zwischen Wischblatt und Wischerarm durch die so erreichte Doppelverrastung.

Gemäß der Fortbildung der Erfindung sind die beiden Bauelemente der Anschlußvorrichtung mit einer von der Pendelachse aus weggerichteten, einfachen linearen Abziehbewegung voneinander lösbar.

Besonders einfache Voraussetzungen für eine solche Abzieh-bzw. Aufsteckbewegung ergeben sich, wenn gabelähnliche, dem Gelenkzapfen zugeordnete Lageraufnahmen am wischerarmseitigen Kupplungsstück nach außen, von der Pendelachse weggerichtete Öffnungsschlitze aufweisen, in welche die Lagerzapfen des wischblattseitigen Kupplungteils einführbar sind.

Weitere vorteilhafte Weiterbildungen und Ausgestaltungen der Erfindung sind in der nachfolgenden Beschreibung eines in der dazugehörigen Zeichnung dargestellten Ausführungsbeispiels angegeben.

### Zeichnung

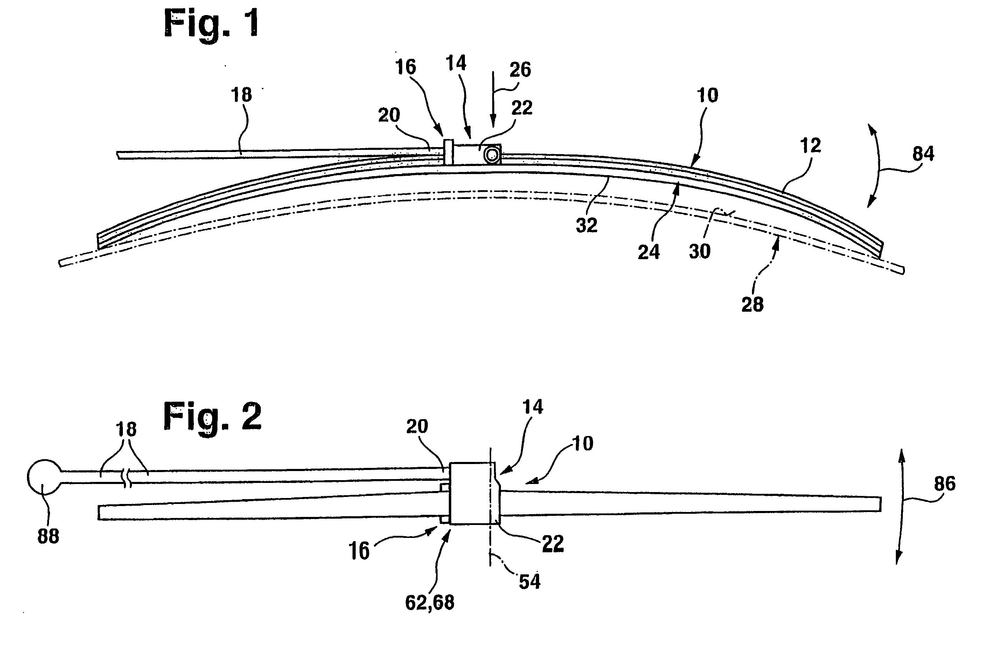

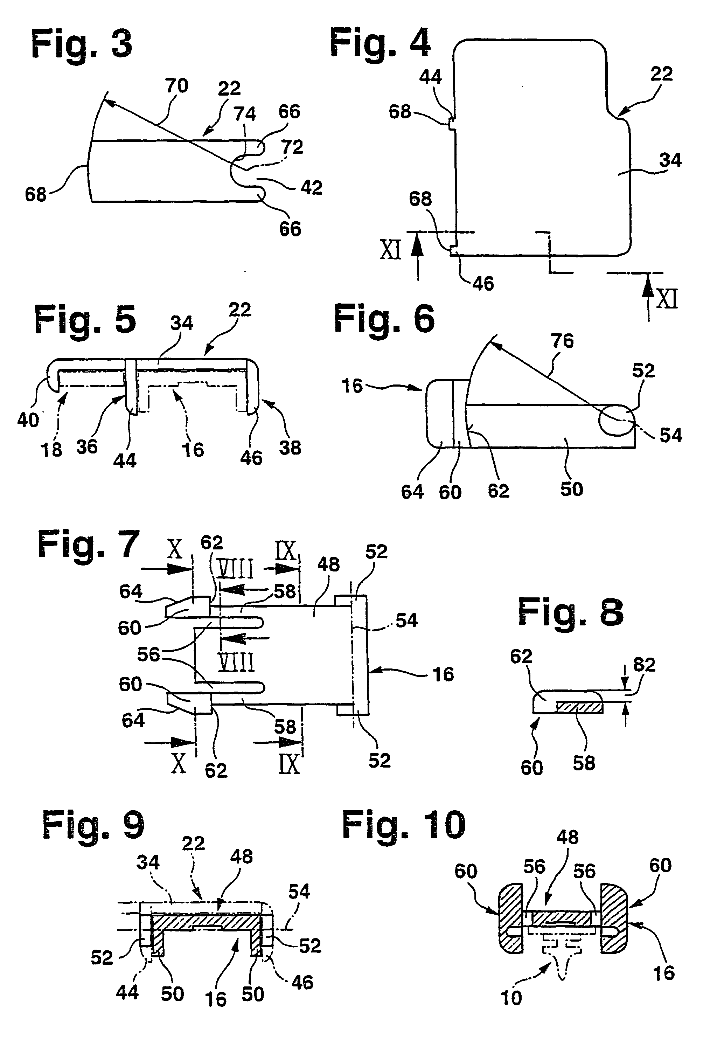

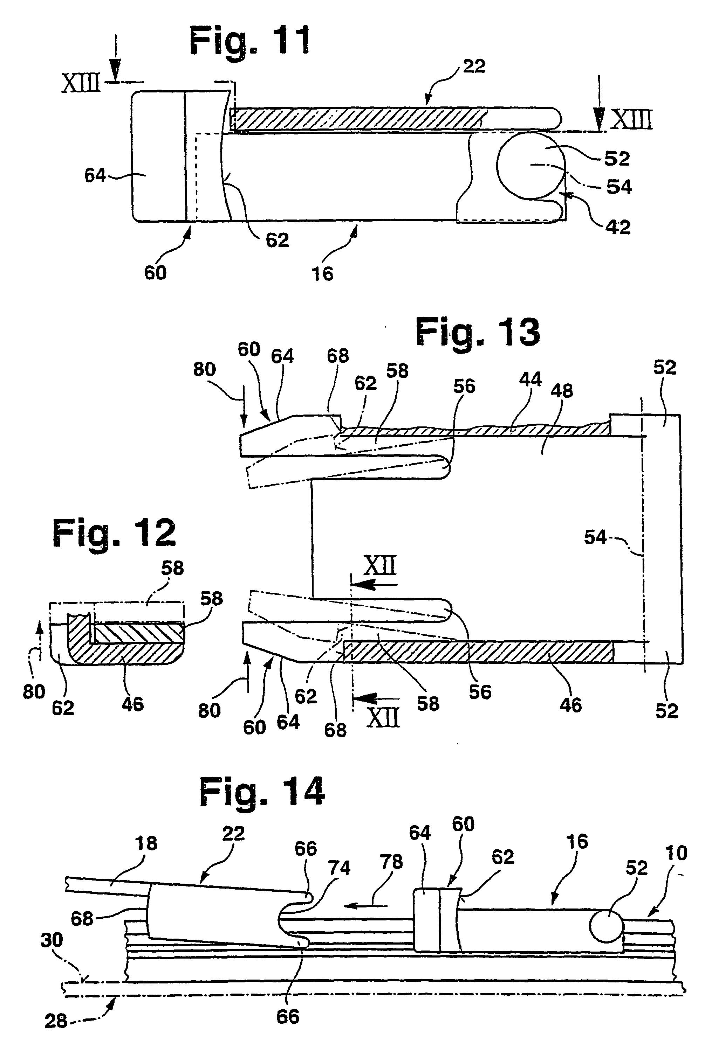

In der Zeichnung zeigen: Figur 1 eine erfindungsgemäße Wischvorrichtung in Seitenansicht, Figur 2 die Wischvorrichtung gemäß Figur 1 in Draufsicht, Figur 3 eine vergrößerte Seitenansicht eines wischerarmseitigen Kupplungsstücks, Figur 4 eine Draufsicht auf das Kupplungsstück gemäß Figur 3, Figur 5 eine andere Seitenansicht des Kupplungsstücks gemäß Figur 3, Figur 6 eine vergrößerte Seitenansicht eines wischblattseitigen Kupplungsteils, Figur 7 eine Draufsicht auf das Kupplungsteil gemäß Figur 6, Figur 8 einen Teilschnitt entlang der Linie VIII-VIII durch das Kupplungsteil gemäß Figur 7, Figur 9 einen um 90° gedrehten Schnitt entlang der Linie IX-IX durch das Kupplungsteil gemäß Figur 7, Figur 10 einen um 90° gedrehten Schnitt entlang der Linie X-X durch das Kupplungsteil gemäß Figur 7, Figur 11 den Zusammenbau der Kupplungselemente gemäß den Figuren 3 und 6, vergrößert dargestellt und entlang der Linie XI-XI in Figur 4 geschnitten, Figur 12 einen Teilschnitt entlang der Linie XII-XII in Figur 13 durch die Anordnung gemäß Figur 11, Figur 13 einen Schnitt entlang der Linie XIII-XIII durch die Anordnung gemäß Figur 11 und Figur 14 die Montagepositionen von Wischerarm und Wischblatt.

### Beschreibung des Ausführungsbeispiels

Ein in den Figuren 1 und 2 dargestelltes Wischblatt 10 weist ein bandartig langgestrecktes, federelastisches, ein- oder mehrteiliges Tragelement 12 auf, an dessen von der zu wischenden Scheibe angewandten Oberseite ein zu einer Anschlußvorrichtung 14 gehörendes, wischblattseitiges Kupplungsteil 16 angeordnet ist, mit dessen Hilfe das Wischblatt 10 mit einem an der Karosserie eines Kraftfahrzeugs geführten, angetriebenen Wischerarm 18 lösbar verbunden werden kann. Dazu ist dieser an seinem freien Ende 20 mit einem ebenfalls zur Anschlußvorrichtung 14 gehörenden, also wischerarmseitigen Kupplungsstück 22 versehen. An der der Scheibe zugewandten Unterseite des Tragelements 12 ist eine langgestreckte, gummielastische Wischleiste 24 längsachsenparallel angeordnet. Der Wischerarm 16 und damit auch das mit dem Kupplungsteil 16 des Wischblatts 10 zusammenarbeitende Kupplungsstück 22 ist in Richtung des Pfeiles 26 zur zu wischenden Scheibe 28 belastet, deren zu wischende Oberfläche in Figur 3 durch eine strichpunktierte Linie 30 angedeutet ist. Da die strichpunktierte Linie 30 die stärkste Krümmung der Scheibenoberfläche darstellen soll ist klar ersichtlich, daß die Krümmung des unbelasteten, mit seinen beiden Enden an der Scheibe 28 anliegenden Wischblatts 10 stärker ist als die maximale Scheibenkrümmung (Figur 1). Unter dem Anpressdruck (Pfeil 26) legt sich das Wischblatt 10 mit der Wischlippe 32 seiner Wischleiste 24 über seine gesamte Länge an der Scheibenoberfläche 30 an. Dabei baut sich im bandartigen, federelastischen Tragelement 12 eine Spannung auf, welche für eine ordnungsgemäße Anlage der Wischleiste 24 beziehungsweise der Wischlippe 32 über deren gesamte Länge an der Kraftfahrzeugscheibe 28 sorgt. Da die in aller Regel sphärisch gekrümmte Scheibe nicht den Abschnitt einer Kugeloberfläche darstellt, muß sich das Wischblatt 10 gegenüber dem Wischerarm 16 während seiner Wischbewegung ständig der jeweiligen Lage und dem Verlauf der Scheibenoberfläche 30 anpassen können. Deshalb ist die Anschlußvorrichtung 14 gleichzeitig als Gelenkverbindung (Schwenkgelenk) zwischen dem Wischblatt 10 und dem Wischerarm 18 ausgebildet, deren Gelenkachse 54 sich im wesentlichen in Wisch- oder Pendelrichtung (Doppelpfeil 86 in Figur 2) erstreckt.

Im Folgenden soll nun auf die besondere Ausgestaltung der Verbindungs- oder Anschlußvorrichtung 14 beziehungsweise der zu dieser gehörenden beiden Vorrichtungselemente 16 und 22 näher eingegangen werden.

Das mit den Figuren 3 bis 5 separat dargestellte Kupplungsstück 22 hat eine Basisplatte 34 an welcher sich zwei mit Abstand voneinander angeordnete Führungswände 36 und 38 befinden. Die eine Führungswand 36 sitzt im mittleren Bereich der Basisplatte 34 an, während die andere Führungswand 38 an einem Randbereich der Basisplatte 34 ansetzt. Die beiden Führungswände 36 und 38 sind parallel zueinander angeordnet. Sie erstrecken sich bei montierter Wischvorrichtung in Wischerarmlängsrichtung in einer auf der Scheibe 28 stehenden Ebene. Es ergibt sich somit in diesem Teilbereich des Kupplungsstücks 22 ein U-förmiger Querschnitt, wobei die beiden Führungswände 36, 38 die an der U-Basisplatte 34 ansetzenden U-Schenkel bilden. Mit Abstand von der einen Führungswand 36 und auf der von der unteren Wand 38 abgewandten Seite ist die Basisplatte 34 mit einem krallenförmigen Ansatz 40 versehen, der ebenfalls parallel zur Wand 36 ausgerichtet ist. Von der Platte 34 aus gesehen ist der Ansatz 40 kürzer als die beiden Führungswände 36 und 38 (Figur 5). Aus Figur 3 ist ersichtlich, daß die beiden Führungswände 36 und 38 an ihrer einen Stirnseite mit einer randoffenen Aufnahme- oder Lageröffnung 42 versehen sind, so daß sich jeweils eine Aufnahme- oder Lagergabel 42 ergibt. Die anderen Stirnseiten der Führungswände 36 und 38 ragen mit Stützschultern 44 und 46 über die Basisplatte 34 hinaus, die sich auch in den Bereich der Basisplatte fortsetzen (Figur 4).

Aus den Figuren 6 bis 10 ist der Aufbau des wischblattseitigen Kupplungsteils 16 ersichtlich. Es hat einen im Querschnitt im wesentlichen U-förmigen Grundkörper 48 (Figur 9) dessen beiden U-Schenkel 50 mit Abstand voneinander angeordnet sind. An den beiden voneinander abgewandten Außenwänden bzw. Außenflächen der U-Schenkel 50 ist jeweils ein Lagerzapfen 52 angeordnet wobei die beiden Zapfenachsen miteinander fluchten und eine gemeinsame Gelenkachse 54 bilden. Wie insbesondere die Figuren 6 und 7 zeigen, sind die beiden Lagerzapfen 52 an dem einen Endabschnitt des Grundkörpers 48 ausgebildet. An dem anderen Endabschnitt des Grundkörpers 16 ist dieser mit zwei randoffenen Schlitzen 56 versehen welche direkt an der Innenseite der beiden U-Schenkel 50 angeordnet sind. Da das Kupplungsteil 16 aus einem elastischen Kunststoff hergestellt ist ergeben sich so zwei einstückig mit dem Grundkörper 48 verbundene Federzungen 58, welche durch die U-Schenkel 50 gebildet sind. Diese Federzungen 58 erstrecken sich beim Ausführungsbeispiel über den U-förmigen Grundkörper 48 hinaus. An ihren freien Enden sind die Federzungen 58 mit Stützleisten 60 versehen, welche sich quer zur Längserstreckung über den U-förmigen Grundkörper 48 hinaus erstrecken (Figur 10). Weiter ragen die Stützleisten 60 auch über die voneinander abgewandten Außenseiten oder Flächen der U-Schenkel 50 hinaus. An jeder der beiden Stützleisten 60 ergibt sich somit jeweils eine an der jeweiligen Außenfläche ansetzende Abfangschulter 62, welche jeweils einer der Stützschultern 44 des Kupplungsstücks 22 zugeordnet ist. Weiter sind die beiden Stützleisten 60 an ihren freien, von den Lagerzapfen 52 abgewandten Enden mit jeweils einer Anlaufschräge 64 versehen, gemäß der sich die beiden Stützleisten zu den freien Enden der Federzungen 58 hin verjüngen (Figur 7). In Abstimmung des wischerarmseitigen Kupplungsstücks 22 auf das wischblattseitige Kupplungsteil 16 sind die auf der von der Pendelachse 88 abgewandten Seite offenen Lagergabeln 42 des Kupplungsstücks 22 auf den Durchmesser der Lagerzapfen 52 des Kupplungsteils 16 abgestimmt. Das bedeutet, daß der Abstand der beiden Gabelzinken 66 voneinander eine ordnungsgemäße Seitenführung der beiden Lagerzapfen 52 gewährleistet, wenn diese in die Gabel eingeführt werden. Weiter zeigt Figur 3, daß die Stützflächen 68 der Stützschultern 44 und 46 mit einem Radius 70 verlaufen, dessen Zentrum 72 identisch ist mit einem weiteren Zentrum um welches sich eine Lager- oder Führungsfläche 74 der Lagergabel 42 erstreckt. Der Krümmungsradius der Führungsfläche 74 entspricht dem Radius der Mantelflächen der Lagerzapfen 52. Da beide Zentren der beiden Lagergabeln 42 mit dem Zentrum 72 der Stützflächen 44 und 46 zusammenfallen ergibt eine durch diese beiden Zentren 72 gelegte Achse ebenfalls eine Gelenkachse, die identisch ist der Gelenkachse 54, wenn die beiden zur Anschlußvorrichtung 14 gehörenden Bauelemente (Kupplungsteil 16 und Kupplungsstück 22) zusammengebaut sind (Figur 11). Weiter ist noch zu beachten, daß - wie insbesondere Figur 6 zeigt - die an den beiden Stützleisten 60 ausgebildeten Abfangschultern 62 in ihrem Verlauf ebenfalls einem Radius 76 folgen, der identisch mit dem Radius 70 der Stützflächen 68.

Aus Figur 5 ist ersichtlich, daß der Abstand zwischen dem Ansatz 40 und der inneren Führungswand 36 so gehalten ist, daß sich ein Aufnahmekanal für den Wischerarm 18 ergibt. Der Abstand zwischen den beiden Führungswänden 36 und 38 ist auf die Breite des Grundkörpers 48 des Kupplungsteils 16 abgestimmt. Zur Verdeutlichung sind in Figur 5 die Konturen des Wischerarms 18 und des Kupplungsteils 16 strichpunktiert in Einbaulage eingezeichnet worden. Dort ist auch ersichtlich, daß die Wände 36, 38 den ihnen zugeordneten Oberflächen - Außenseiten der U-Schenkel 50 - so benachbart sind, daß sich eine gute Seitenführung des Wischblatts 10 am Wischerarm 18, 22 ergibt. Umgekehrt ist in Figur 9 strichpunktiert die Montageposition des Kupplungsstücks 22 am Kupplungsteil 16 angegeben. Figur 10 zeigt die Anbauposition des Kupplungsteils 16 am strichpunktiert dargestellten Wischblatt 10.

Um das mit dem Kupplungsteil 16 versehene Wischblatt an dem das Kupplungsstück 22 tragenden Wischerarm 18 zu befestigen, wird zunächst das Wischblatt in die Figur 14 dargestellt Position zum Wischerarm 18 gebracht. Danach wird das Wischblatt in Richtung des Pfeiles 78 verschoben und darauf geachtet, daß die Federzungen 58 zwischen die beiden Führungswände 36 und 38 gelangen. Während dieser Montagebewegung 78 stoßen nun zunächst die Anlaufschrägen 64 im Bereich der Lagergabel 42 gegen die Führungswände 36 und 3B, so daß die Federzungen 58 zusammen mit ihren Stützleisten 60 in Richtung der Pfeile 80 in Figur 13 auslenken, bis sie die in Figur 13 strichpunktiert dargestellte Positionen erreichen. Da die Breite der Schlitze 56 größer ist als die wirksame Breite 82 der Abfangschultern 62 ist eine problemloses Durchführen des Kupplungsteils 16 durch den von den Führungswänden 36 und 38 des Kupplungsstücks 22 begrenzten Kanal möglich. Wenn die in den Figuren 11, 12 und 13 dargestellte Betriebsposition zwischen Wischerarm und Wischblatt erreicht ist federn die seither vorgespannten Federzungen 58 entgegen der Richtung der Pfeile 80 in ihre Ausgangsposition zurück, die in Figur 13 ausgezogen dargestellt ist. Danach liegen sich die Abfangschultern 62 des Kupplungsteils 16 und die Stützflächen 68 der Stützschultern 44 und 46 des Kupplungsstücks 22 direkt gegenüber. Durch die entsprechende Abstimmung der Stützflächenradien 70 und der Abfangschulterradien 76 ist dann eine praktisch spiellose Verbindung zwischen Wischerarm und Wischblatt sichergestellt, weil in der dann erreichten Position auch die Mantelflächen der Lagerzapfen 52 an den Führungsflächen 74 der Lagergabeln 42 anliegen. Wie Figur 14 zeigt, ist zum Anschließen des Wischblatts 10 am Wischerarm 18 lediglich eine lineare Bewegung (Pfeil 78) nötig, ohne daß dazu der Wischerarm 18 über seine Betriebsposition hinaus angehoben werden muß.

Zum Abnehmen des Wischblatts 10 vom Wischerarm 18 müssen die beiden Federzungen 58 in Richtung der Pfeile 80 entgegen der Federkraft oder Rückstellkraft ausgelenkt werden und zwar soweit, daß ein problemloses Durchführen der Stützleisten 60 durch den von den Führungswänden 36 und 38 begrenzten Aufnahmekanal des Wischerarms entgegen der Richtung des Pfeils 78 in Figur 14 möglich ist. Auch dazu muß der Wischerarm 18 nicht über seine Betriebsposition hinaus von der Scheibe abgehoben werden. Insbesondere aus Figur 11 ist klar ersichtlich, daß zwischen dem Wischblatt 10 und dem Wischerarm 18 beziehungsweise zwischen dem Kupplungsteil 16 und dem Kupplungsstück 22 eine Schwenkbewegung um die Gelenkachse 54 in Richtung des Doppelpfeils 84 in Figur 1 möglich ist, ohne daß deshalb die Stützschultern und die Abfangschultern vollständig aus ihrer Gegenüberlage gelangen, so daß eine betriebssichere Verbindung zwischen Wischerarm 18 und Wischblatt 10 erreicht ist. Diese Schwenkbewegung ist zur eingangs erläuterten Anpassung des Wischblatts an den verlauf der Scheibenoberfläche 30 erforderlich.

Weiter ist aus Figur 2 ersichtlich, daß sich die Gelenkachse 54 im wesentlichen in Richtung der Wisch- oder Pendelbewegung (Doppelpfeil) 86 und daß sich bei montierter Wischvorrichtung die mit den Stützflächen 68 versehenen Stützschultern 44, 46 und die Abfangschulter 62 zwischen der Pendelachse 88 und der Gelenkachse 54 befinden. Aus den Figuren 11, 13 und 14 ist entnehmbar, daß die wischerarmfesten Stützschultern 44 und 46 beziehungsweise 68 zur Pendelachse 88 (Figur 2) weisen und daß die von der Pendelachse 88 wegweisenden Abfangschultern 62 den Stützschultern zugeordnet gegenüber liegen. Aus der obigen Funktionsbeschreibung ist weiter entnehmbar, daß zumindest eine der beiden Schultern gegen eine Rückstellkraft vollständig aus der Gegenüberlage zur anderen Schulter hinausbewegbar ist. Die Rückstellkraft ist in diesem Fall jene Kraft, gegen welche die Federzungen 58 heraus bewegt werden müssen (Figur 13), um die Montage beziehungsweise Demontage zwischen Wischblatt 10 und Wischerarm 18 zu erreichen.

## Patentansprüche

1. Wischvorrichtung für Scheiben von Kraftfahrzeugen mit mindestens einem am Kraftfahrzeug geführten, pendelnd angetriebenen Wischerarm (18), an dessen freiem, von der Pendelachse (88) abliegenden Ende ein quer zur Pendelrichtung (Doppelpfeil 86) langgestrecktes, an der Scheibe (28) anlegbares Wischblatt (10) über eine, wischerarmseitige und wischblattseitige Kupplungselemente (22, 16) aufweisende Anschlussvorrichtung (14) lösbar angelenkt ist, wobei sich die Gelenkachse (54) im wesentlichen in Pendelrichtung erstreckt und die Wischvorrichtung wenigstens eine wischerarmfeste, zur Pendelachse (88) weisende Stützschulter (44, 46, 68) hat, der eine wischblattfeste, von der Pendelachse (88) wegweisende Abfangschulter (62) zugeordnet gegenüber liegt, **dadurch gekennzeichnet, dass** zumindest eine der beiden Schultern (44, 46, 68, 62) an einer federnden Zunge (58) ausgebildet und gegen eine Rückstellkraft vollständig aus der Gegenüberlage zur anderen Schulter (62, 44, 46, 68) zum Zwecke einer Montage und Demontage herausbewegbar ist, so dass das Wischblatt in einer linearen Bewegung anschließbar bzw. abziehbar ist.

2. Wischvorrichtung nach Anspruch 1, **dadurch gekennzeichnet, daß** die wischerarmfeste Stützschulter (44, 46, 68) am wischerarmseitigen Kupplungsstück (22) und die wischblattseitige Abfangschulter (62) am wischblattseitigen Kupplungsteil (16) der Anschlußvorrichtung (14) angeordnet sind.

3. Wischvorrichtung nach einem der Ansprüche 1 oder 2, **dadurch gekennzeichnet, daß** die Stützschulter (44, 46, 68) und die Abfangschulter (62) zwischen der Pendelachse (88) und der Gelenkachse (54) angeordnet sind.

4. Wischvorrichtung nach einem der Ansprüche 2 oder 3, **dadurch gekennzeichnet, daß** das wischerarmseitige Kupplungsstück (22) eine sich in einer auf der Scheibe (28) stehenden Ebene befindliche, im wesentlichen in Richtung der Wischerarmlängsachse erstreckenden Wand (36, 38) hat, der eine Oberfläche des wischblattseitigen Kupplungsteils (16) benachbart ist und daß an der Wand die Stützschulter (44, 46, 68) und an der Oberfläche die Abfangschulter (62) ausgebildet sind.

5. Wischvorrichtung nach Anspruch 4, **dadurch gekennzeichnet, daß** das wischerarmseitige Kupplungsstück (22) quer zur Längsachse des Wischerarms (18) einen U-förmigen Querschnitt aufweist, daß in den U-Schenkeln (36, 38) dieses Kupplungsstücks (22) je eine Lageraufnahme (42) für einen Lagerzapfen (52) des wischblattseitigen Kupplungsteils (16) angeordnet ist, welches zwischen die U-Schenkel des wischerarmseitigen Kupplungsstücks (22) eintaucht und daß die Innenseite zumindest eines U-Schenkels (36, 38) die mit der Stützschulter versehene Wand bildet.

6. Wischvorrichtung nach einem der Ansprüche 4 oder 5, **dadurch gekennzeichnet, daß** das wischblattseitige Kupplungsteil (16) einen Grundkörper (48) hat an welchem die beiden Lagerzapfen (52) so angeordnet sind, daß sie eine gemeinsame Gelenkachse (54) haben und zumindest eine Fläche des Grundkörpers die mit der Abfangschulter (62) versehene Oberfläche bildet.

7. Wischvorrichtung nach einem der Ansprüche 1 bis 6, **dadurch gekennzeichnet, daß** sowohl die Stützschulter (44, 46, 68) als auch die Abfangschulter (62) einen um die Achse (54) des Gelenks gekrümmten Verlauf haben und daß der jeweilige Krümmungsradius (70 beziehungsweise 76) dem jeweiligen Abstand von der Gelenkachse (54) entspricht.

8. Wischvorrichtung nach einem der Ansprüche 6 oder 7, **dadurch gekennzeichnet, daß** an dem Grundkörper (48) ein Ende einer im wesentlichen in Richtung der Gelenkachse (54) auslenkbaren Federzungen (58) gehalten ist, an deren freien Ende die Abfangschulter (62) angeordnet ist.

9. Wischvorrichtung nach Anspruch 8, **dadurch gekennzeichnet, daß** der Grundkörper (48) aus einem federelastischen Kunststoff hergestellt ist und daß die mit der Abfangschulter (62) versehene Federzunge (58) einstückig mit diesem verbunden ist.

10. Wischvorrichtung nach Anspruch 9, **dadurch gekennzeichnet, daß** im Bereich der Abfangschulter (62) zwischen dem Grundkörper (48) und der Federzunge (58) ein zur Schulter hin randoffener Schlitz (56) vorhanden ist, dessen Breite größer ist als die wirksame Breite (82) der Abfangschulter (62).

11. Wischvorrichtung nach einem der Ansprüche 5 bis 10, **dadurch gekennzeichnet, daß** an jedem der beiden Kupplungselemente (16 bzw. 22) mehrere Stützschultern (44) und Abfangschultern (62) angeordnet sind.

12. Wischvorrichtung nach Anspruch 11, **dadurch gekennzeichnet, daß** an den beiden den Grundkörpern (48) des wischblattseitigen Kupplungsteils (16) übergreifenden U-Schenkeln (36, 38) des wischerarmseitigen Kupplungsstücks (22) je eine Stützschulter (44, 46, 68) ausgebildet ist und daß an jeder diesen beiden, den U-Schenkeln benachbarten Seiten des Grundkörpers (48) eine mit der Abfangschulter (62) versehene Federzunge (58) angeordnet ist.

13. Wischvorrichtung nach einem der vorhergehenden Ansprüche, **dadurch gekennzeichnet, daß** die beiden Bauelemente (16 und 22) der Anschlußvorrichtung (14) von der Pendelachse (88) aus weggerichtet voneinander lösbar sind.

14. Wischvorrichtung nach Anspruch 13, **dadurch gekennzeichnet, daß** gabelähnliche, den Gelenkzapfen (52) zugeordnete Lageraufnahmen (42) am wischerarmseitigen Kupplungsstück (22) nach außen, von der Pendelachse (88) weggerichtete Öffnungsschlitze aufweisen in welche die Lagerzapfen (52) des wischblattseitigen Kupplungsteils (16) einführbar sind.

## Claims

1. Wiper device for windows of motor vehicles, having at least one wiper arm (18), which is guided on the motor vehicle and is driven in an oscillating manner into the free end of which, which is remote from the oscillation axis (88), a wiper blade (10), which is elongate transversely with respect to the direction of oscillation (double arrow 86) and can be placed against the window (28), is coupled releasably via a connecting device (14) having wiper-arm-side and wiper-blade-side coupling elements (22, 16), the axis of articulation (54) extending essentially in the direction of oscillation, and the wiper device having at least one supporting shoulder (44, 46, 68), which is fixed on the wiper arm, points towards the oscillation axis (88) and has assigned opposite it an intercepting shoulder (62) which is fixed on the wiper blade and points away from the oscillation axis (88), **characterized in that** at least one of the two shoulders (44, 46, 68, 62) is formed on a resilient tongue (58) and can be moved completely out of the opposite position to the other shoulder (62, 44, 46, 68) counter to a restoring force for the purpose of installation and removal, with the result that the wiper blade can be connected or can be pulled off in a linear movement.

2. Wiper device according to Claim 1, **characterized in that** the supporting shoulder (44, 46, 68), which is fixed on the wiper arm, is arranged on the wiper-arm-side coupling element (22) and the wiper-blade-side intercepting shoulder (62) is arranged on the wiper-blade-side coupling part (16) of the connecting device (14).

3. Wiper device according to either of Claims 1 and 2, **characterized in that** the supporting shoulder (44, 46, 68) and the intercepting shoulder (62) are arranged between the oscillation axis (88) and the axis of articulation (54).

4. Wiper device according to either of Claims 2 and 3, **characterized in that** the wiper-arm-side coupling element (22) has a wall (36, 38) which is situated in a plane perpendicular to the window (28), extends essentially in the direction of the longitudinal axis of the wiper arm and has adjacent to it a surface of the wiper-blade-side coupling part (16), and **in that** the supporting shoulder (44, 46, 68) is formed on the wall and the intercepting shoulder (62) is formed on the surface.

5. Wiper device according to Claim 4, **characterized in that** the wiper-arm-side coupling element (22) has a U-shaped cross section transversely with respect to the longitudinal axis of the wiper arm (18), **in that** a respective bearing receptacle (42) for a journal (52) of the wiper-blade-side coupling part (16) is arranged in the U limbs (36, 38) of this coupling element (22), the said coupling part dipping between the U limbs of the wiper-blade-side coupling element (22), and **in that** the inside of at least one U limb (36, 38) forms the wall which is provided with the supporting shoulder.

6. Wiper device according to either of Claims 4 and 5, **characterized in that** the wiper-blade-side coupling part (16) has a basic body (48) on which the two journals (52) are arranged in such a manner that they have a common axis of articulation (54), and at least one surface of the basic body forms the surface which is provided with the intercepting shoulder (62).

7. Wiper device according to one of Claims 1 to 6, **characterized in that** the supporting shoulder (44, 46, 68) and the intercepting shoulder (62) have a profile which is curved about the axis (54) of the joint, and **in that** the particular radius of curvature (70 or 76) corresponds to the particular distance from the axis of articulation (54).

8. Wiper device according to either of Claims 6 and 7, **characterized in that** one end of a spring tongue (58), which can be deflected essentially in the direction of the axis of articulation (54), is held on the basic body (48) and the intercepting shoulder (62) is arranged at its free end.

9. Wiper device according to Claim 8, **characterized in that** the basic body (48) is produced from a spring-elastic plastic, and **in that** the spring tongue (58), which is provided with the intercepting shoulder (62), is connected integrally thereto.

10. Wiper device according to Claim 9, **characterized in that** in the region of the intercepting shoulder (62), between the basic body (48) and the spring tongue (58) there is a slot (56) which is open at the edge towards the shoulder and the width of which is larger than the effective width (82) of the intercepting shoulder (62).

11. Wiper device according to one of Claims 5 to 10, **characterized in that** a plurality of supporting shoulders (44) and intercepting shoulders (62) are arranged on each of the two coupling elements (16 and 22).

12. Wiper device according to Claim 11, **characterized in that** a respective supporting shoulder (44, 46, 68) is formed on the two U limbs (36, 38) of the wiper-arm-side coupling element (22), which limbs fit over the basic body (48) of the wiper-blade-side coupling part (16), and **in that** a spring tongue (58), which is provided with the intercepting shoulder (62), is arranged on each of these two sides of the basic body (48), which sides are adjacent to the U limbs.

13. Wiper device according to one of the preceding claims, **characterized in that** the two structural elements (16 and 22) of the connecting device (14) can be detached from each other in a manner directed away from the oscillation axis (88).

14. Wiper device according to Claim 13, **characterized in that** fork-like bearing receptacles (42), which are assigned to the pivots (52), on the wiper-arm-side coupling element (22) have opening slots which are directed to the outside away from the oscillation axis (88) and into which the journals (52) of the wiper-blade-side coupling part (16) can be introduced.

## Revendications

1. Dispositif d'essuie-glace pour pare-brise de véhicules automobiles comportant :
- au moins un bras (18) guidé par rapport au véhicule et entraîné suivant un mouvement pendulaire, l'extrémité libre du bras à l'opposé de l'axe pendulaire (88) étant munie d'un balai d'essuie-glace (10) monté transversalement à la direction du mouvement pendulaire (double flèche 86) et s'appliquant contre le pare-brise (28) en étant relié de manière amovible par un dispositif de liaison (14) ayant un élément d'accouplement du côté du bras et un élément d'accouplement du côté du balai (22, 16), l'axe d'articulation (54) s'étendant essentiellement dans la direction du mouvement pendulaire, et
- au moins un épaulement d'appui (44, 46, 68) solidaire du bras et tourné vers l'axe pendulaire (88), cet épaulement d'appui étant en regard d'un épaulement de réception (62) solidaire du balai et venant en saillie de l'axe pendulaire (88),
**caractérisé en ce qu'**
au moins l'un des deux épaulements (44, 46, 68, 62) est réalisé sur une languette élastique (58) et peut être déplacé contre une force de rappel, pour sortir complètement de la position en regard de l'autre épaulement (62, 44, 46, 68) à des fins de montage et de démontage, de manière à pouvoir installer ou tirer le balai d'essuie-glace suivant un mouvement linéaire.

2. Dispositif d'essuyage selon la revendication 1,
**caractérisé en ce que**
l'épaulement d'appui (44, 46, 68) solidaire du bras est prévu sur l'élément d'accouplement du côté du bras (22) et l'épaulement de réception (62) du côté du balai est prévu sur l'élément d'accouplement du côté du balai (16) et appartenant au dispositif de liaison (14).

3. Dispositif d'essuyage selon l'une des revendications 1 ou 2,
**caractérisé en ce que**
les épaulements d'appui (44, 46, 68) et l'épaulement de réception (62) sont installés entre l'axe pendulaire (88) et l'axe d'articulation (54).

4. Dispositif d'essuyage selon l'une des revendications 2 ou 3,
**caractérisé en ce que**
l'élément d'accouplement (22) du côté du bras possède une paroi (36, 38) s'étendant essentiellement dans la direction de l'axe longitudinal du bras et se trouvant dans un plan debout par rapport au pare-brise (28), et l'élément d'accouplement (16) du côté du balai a une surface voisine de cette paroi, et l'épaulement d'appui (44, 46, 68) étant réalisé sur la paroi et l'épaulement de réception (62) étant réalisé sur cette surface voisine.

5. Dispositif d'essuyage selon la revendication 4,
**caractérisé en ce que**
l'élément d'accouplement du côté du bras (22) a une section en forme de U transversale à l'axe longitudinal du bras d'essuie-glace (18),
les branches de U (36, 38) de cet élément d'accouplement (22) ayant chacune un logement de palier (42) pour un tourillon de palier (52) de l'élément d'accouplement (16) côté balai, qui pénètre dans les branches de l'élément d'accouplement (22) en U, du côté du bras d'essuie-glace, et
le côté intérieur d'au moins une branche du U (36, 38) forme une paroi munie de l'épaulement d'appui.

6. Dispositif d'essuyage selon l'une des revendications 4 ou 5,
**caractérisé en ce que**
l'élément d'accouplement du côté du balai (16) comporte un corps de balai (48) muni des deux tourillons de palier (52) montés de façon à avoir un axe d'articulation commun (54) et pour qu'au moins une surface du corps de base portant l'épaulement de réception (62) forme la surface supérieure.

7. Dispositif d'essuyage selon l'une des revendications 1 à 6,
**caractérisé en ce qu'**
à la fois l'épaulement d'appui (44, 46, 68) et l'épaulement de réception (62) ont une forme cintrée autour de l'axe de l'axe (54) de l'articulation, et
le rayon de courbure respectif (70) ou (76) correspond à la distance par rapport à l'axe d'articulation (54).

8. Dispositif d'essuyage selon l'une des revendications 6 ou 7,
**caractérisé en ce que**
le corps de base (48) porte une extrémité d'une languette élastique (58) qui se déforme essentiellement en direction de l'axe d'articulation (54) et dont l'extrémité libre porte l'épaulement de réception (62).

9. Dispositif d'essuyage selon la revendication 8,
**caractérisé en ce que**
le corps de base (48) est réalisé en une matière plastique ayant l'élasticité d'un ressort et la languette élastique (58) munie de l'épaulement de réception (62) est reliée en une seule pièce avec celui-ci.

10. Dispositif d'essuyage selon la revendication 9,
**caractérisé en ce qu'**
au niveau de l'épaulement de réception (62), entre le corps de base (48) et la languette élastique (58), il y a une fente (56) à bord ouvert en direction de l'épaulement et dont la largeur est supérieure à la largeur active (82) de l'épaulement de réception (62).

11. Dispositif d'essuyage selon l'une des revendications 5 à 10,
**caractérisé en ce que**
chacun des deux éléments d'accouplement (16, 22) comporte plusieurs épaulements d'appui (44) et épaulements de réception (62).

12. Dispositif d'essuyage selon la revendication 11,
**caractérisé en ce que**
chacune des deux branches de U (36, 38) de l'élément d'accouplement du côté du bras (22), chevauchant le corps de base (48) de l'élément d'accouplement du côté du balai (16) d'essuie-glace, comporte chaque fois un épaulement d'appui (44, 46, 68), et
chacun des deux côtés du corps de base (48) voisin des branches de la pièce en U, comporte une languette élastique (58) munie de l'épaulement de réception (62).

13. Dispositif d'essuyage selon l'une des revendications précédentes,
**caractérisé en ce que**
les deux éléments d'accouplements (16 et 22) du dispositif de liaison (14) peuvent être détachés l'un de l'autre en s'écartant de l'axe pendulaire (88).

14. Dispositif d'essuyage selon la revendication 13,
**caractérisé en ce que**
l'élément d'accouplement (62) du côté du bras (22) comporte des logements de palier (42) en forme de fourches associées aux tourillons de palier (52), et ayant des fentes d'ouverture dirigées vers l'extérieure à l'opposé de l'axe pendulaire (88) et dans lesquelles s'introduisent les tourillons de palier (52) de l'élément d'accouplement du côté du balai (16) d'essuie-glace.
